# EUROPEAN PATENT SPECIFICATION

(11) **EP 2 160 936 B1**
(45) Date of publication and mention of the grant of the patent: **11.01.2012**
(21) Application number: 08252964.5
(22) Date of filing: 05.09.2008
(51) Int. Cl.: A01B 21/08

(54) **Agricultural implement**
Landwirtschaftliches Gerät
Outil agricole

(43) Date of publication of application: 10.03.2010
(73) Proprietor: Kelly, Shane, Booleroo Center, South Australia 5482 (AU)
(72) Inventor: Kelly, Shane, Booleroo Center, South Australia 5482 (AU)
(74) Representative: Instone, Terry

(56) References cited:
- AU-B2- 611 638
- SU-A1- 745 395
- US-A- 3 327 787

## Description

### BACKGROUND OF THE INVENTION

This invention relates generally to agricultural equipment and, more particularly, to an agricultural implement that does not merely clear away material on top of a ground surface but rather is able to furrow the soil, break up the material so it can be incorporated into the ground or decomposed. The agricultural implement also provides for the leveling of the soil and uprooting of weeds.

Farmed land by its nature undergoes cyclic periods of sowing, growth, and harvest. Sowing, growing and harvesting of crops all require the certain conditioning of the soil if successful returns are going to be obtained from the worked area. Conditions left over a farmed area particularly after harvest do not normally provide the ideal conditions in which further crops can be sowed. When the main crop is harvested the soil often includes weeds that need to be destroyed as well as stubble and the like from previous crops requiring uprooting and cutting before any seed can be sowed.

Not only does stubble require uprooting or cutting and weeds still need to be killed off, but there is also the further requirement of having the soil leveled such that sowing implements responsible for reintroducing a new crop into the field can do so efficiently and expeditiously.

Though in the past various agricultural implements have been provided that attempt to address certain of the above referenced ground engaging problems associated with uprooting or cutting of stubble, killing of weeds and also leveling, as to date there is yet to be provided one multi purpose simple structural agricultural piece of apparatus that can achieve all these objectives when engaging a ground surface. Further, existing proposals may even lead to an exaggeration of some of the problems also discussed above.

For example, a Russian patent referred to as SU1523061 discloses a heavy chain having a sequence of interconnected links that may be pulled along by a tractor or the like. The chain is able to pick up any debris, stubble or other material left on the surface and as it works its way across a field, it essentially drags this material like a rake, and slowly levels out the ground left behind. A problem with this construction is that as the chain has no special characteristics other than simply being interconnected links with no set rotation or the like, the chain simply operates like one large heavy broom or rake which would carry the material along in a sweeping action rather than have the material settle in situ as part of the leveling process.

The chain in this Russian invention has no capabilities of killing weeds that remain on the surface nor can it effectively uproot or cut stubble and leave such material in place. As explained above, rather than simply uprooting or cutting the stubble left on the surface, the chain would pull and sweep this material away from the location from where it was originally derived from. Hence, the swept away material has no opportunity to decompose and return to the soil. At best the agricultural implement was adapted to ground engage in SU1523061 for a raking effect of the ground by virtue of blades or spikes that preceded the chain, and thereafter a flattening or sweeping effect was provided for by the chain. The mere raking of material on the land being tillaged is undesirable as it removes important nutrient derivable from the stubble and the like and also exposes fresh soil to wind erosion and the like.

There have been further proposal whereby chains have been used to address some of the problems discussed above, but again each of these agricultural implements, in seeking to solve the problem of one aspect, tend to exaggerate problems associated with the other aspects. For example, US Pat. No. 4,893,682 provides for an agricultural implement in which a rotating flexible chain can assist in soil erosion control. Nonetheless, the intended purpose of the invention is simply to slow down erosion by controlling water movement, which is done by the creation of dimples or miniature dams or the like across the ground surface as the chain is passed there along. The creation of these dimple features results from the unique baffles or blades that extend out from longitudinal links. Though the chain is being pulled along by a tractor or the like, it still does not have a multi-purpose function that is able to provide ground leveling, weed control and stubble break up substantially in situ. As with the chain provided for in the Russian document referred to above, all this chain does is provide a raking effect.

Although the devices proposed by SU745395 and SU982551 are potentially able to provide some ground leveling effect, there is no mechanism to break up stubble, nor is there the ability to control the weed, by cutting up the weeds with the action of some further structural feature.

AU 611638 B which discloses the features of the preamble of claim 1 discloses an offset discing implement comprising: a mainframe structure having a plurality of linear gangs of discs mounted thereto in a substantially diamond shaped configuration wherein the leading and trailing opposing points of the diamond configuration substantially coincide with the central longitudinal axis of said mainframe structure, said mainframe comprising a central frame with said central frame being supported by at least one height adjustable wheel assembly; characterised in that the central frame has detachably connected thereto at least one height adjustable steerable wheel assembly mounted forwardly of the said central frame with the steering direction of the wheel being adjusted in response to the direction in which the discing implement is drawn.

Therefore, it would be desirable to have an agricultural device that does not just clear away material from the top of a ground surface, but rather breaks up the material and furrows the ground so that the broken up material may be incorporated into the soil or decomposed. Further, it would be desirable to have an agricultural implement that levels a ground surface, does not allow its chain harrows to become high centered, and which includes auxiliary and redundant harrows for efficient and complete breaking up and harrowing of surface materials and soil.

### SUMMARY OF THE INVENTION

The invention provides an agricultural implement as set out in claim 1 having preferred features as set out in the dependent claims.

Accordingly, an agricultural implement according to the present invention includes a frame having a front end, a rear end, a left side, a right side, and a plurality of tires. Further, the implement includes a plurality of harrow members, each harrow member having plurality of discs and a chain with a plurality of links. The discs are coupled to the links and extend generally outwardly therefrom. A first harrow is operatively coupled to the frame generally adjacent to the front end and said left side, wherein the first harrow member extends in a first diagonal direction. A second harrow member is operatively coupled to the frame generally adjacent the front end and right side, wherein the second harrow member extends in a second diagonal direction. A third harrow member is operatively coupled to the frame generally adjacent the left side and the rear end, wherein the third harrow member also extends in the second diagonal direction. A fourth harrow member is operatively coupled to the frame generally adjacent the right side and the rear end, wherein the fourth harrow member extends in the first diagonal direction. Additional harrow members may be positioned to the interior of the harrows disclosed above and may be situated at opposing diagonal configurations.

Each chain has a front end and a rear end with each chain front end being relatively forward of the chain rear end. Further, each disc has a concave side facing a respective chain front end and a convex side facing a respective chain rear end. The first, second, third, and fourth harrows are outer harrow members. Each outer harrow member chain has an end coupled to a tensioning assembly such that the harrow member remains flexible to conform to a ground surface but with tension not to either bottom out in low areas or to glide over high areas without digging in.

It is important that the concave portions of the discs generally face forward. This facilitates a greater ability to engage the soil and to furrow the soil. In essence, this orientation may actually contribute to a sharpening of the leading edge of the disc so as to allow it to more effectively cut and uproot weeds and improves the effect of mulching the stubble. In addition, the forward orientation of the concave portions more effectively turns the soil for creating a greater ability to level uneven fields. The greater movement of soil is also beneficial when using the harrow to incorporate beneficial seeds, manures, and fertilizers into the soil.

The agricultural implement also includes a pair of offset rear wheels that inhibit the harrow members from becoming high centered when one portion of the implement is situated over a low area, e.g. a water furrow, while another portion is over a high area. More particularly, the offset wheels assist in keeping the entire implement properly positioned over a ground surface while being dragged over uneven portions of a field.

Therefore, a general object of this invention is to provide an agricultural implement for breaking up the ground, furrowing it, and depositing the broken up material back into the ground.

Another object of this invention is to provide an agricultural implement, as aforesaid, that levels the ground by maintaining its flexible chain harrows in tension.

Still another object of this invention is to provide an agricultural implement, as aforesaid, that includes multiple chain harrows in diagonal configurations for breaking up soil and other material.

Yet another object of this invention is to provide an agricultural implement, as aforesaid, that keeps its chain harrows from becoming high centered.

A further object of this invention is to provide an agricultural implement, as aforesaid, in which its plurality of concave discs and chain links enable material to pass through rather than being dragged along.

A still further object of this invention is to provide an agricultural implement, as aforesaid, having chain and disc links that are rotatable about the longitudinal direction of the chain so as to effect multi-purpose actioning of the soil by being able to level the surface rather than dragging material while also breaking up or uprooting weeds or stubble.

Still another object of this invention is to provide an agricultural implement, as aforesaid, in which the main framework includes left and right folding members that may be folded both upwardly and inwardly for transport and storage.

Other objects and advantages of the present invention will become apparent from the following description taken in connection with the accompanying drawings, wherein is set forth by way of illustration and example, embodiments of this invention.

### BRIEF DESCRIPTION OF THE DRAWINGS

Fig. 1 is a perspective view of an agricultural implement according to a preferred embodiment of the present invention;
Fig. 2 is an isolated view on an enlarged scale taken from a portion of Fig. 1;
Fig. 3 is an isolated view on an enlarged scale of the offset wheels as shown in Fig. 1;
Fig. 4a is a top view of a chain harrow member removed from the agricultural implement as in Fig. 1;
Fig. 4b is an isolated view on an enlarged scale taken from a portion of the harrow member of Fig 4a;
Fig. 5a is a perspective view of the agricultural implement on a reduced scale as in Fig. 1 with the side members in an unfolded configuration;
Fig. 5b is a perspective view of the agricultural implement as in Fig. 5a with the side members in an upwardly folded configuration;
Fig. 5c is a perspective view of the agricultural implement as in Fig. 5a with the side members in an upwardly and inwardly folded configuration;
Fig. 6 is a perspective view of a disc removed from a harrow member wherein the link is an open link;
Fig. 7 is a perspective view of a disc removed from a harrow member, wherein the link is a closed link;
Fig. 8 is a cross sectional view of the disc as in Fig. 6 showing the disc and link with an integrated construction;
Fig. 9 is a side view of a portion of a harrow member as in Fig. 4b;
Fig.10 is a cross sectional view of the disc as in Fig. 6 showing the disc and link with a separated construction
Fig. 11 is an exploded view of the disc as in Fig. 6; and
Fig. 12 is another perspective view of a chain harrow member.

### DESCRIPTION OF THE PREFERRED EMBODIMENT

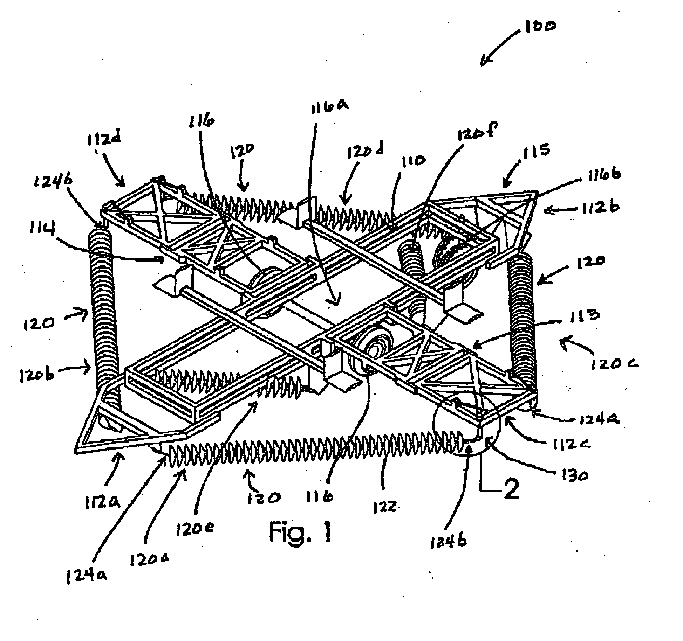

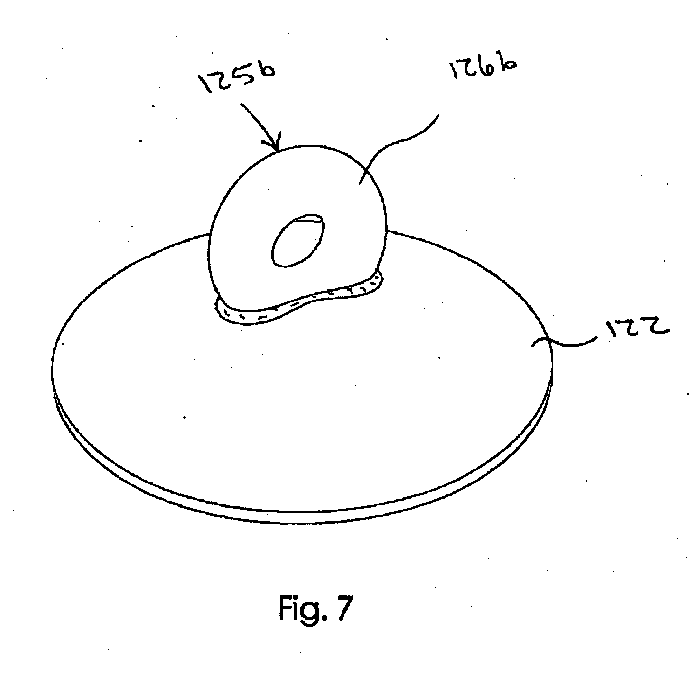

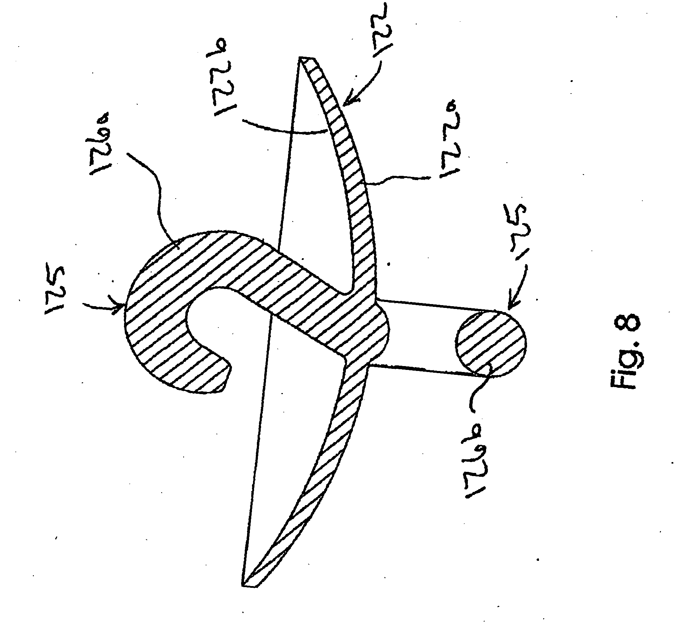

An agricultural implement 100 (also referred to herein as a "harrow device") according to the present invention will now be described in detail with reference to Figs. 1 through 12 of the accompanying drawings. More particularly, an agricultural implement 100 according to the current invention includes a frame 110 and a plurality of harrow members 120.

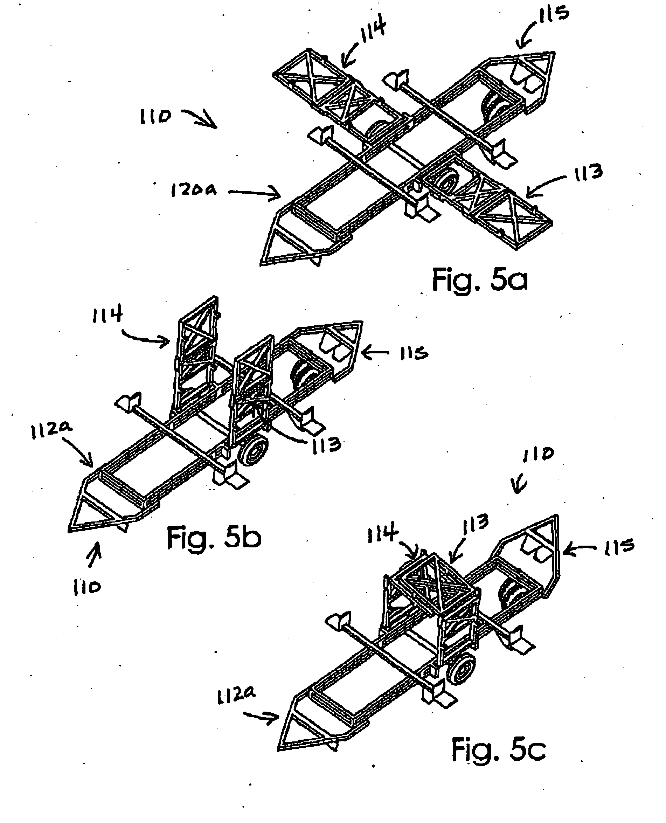

The frame 110 has a front end 112a, a rear end 112b, a left side 112c, and a right side 112d. As shown in Figs. 5a through 5c, a first folding member 113 may define the left side 112c, and a second folding member 114 may define the right side 112d. The folding members 113, 114 may selectively fold upwardly (Fig. 5b) relative to a remainder 111 of the frame 110 and inwardly (Fig. 5c) relative to the remainder 111 of the frame 110. Similarly, a folding member 115 may define the rear end 112b, and the folding member 115 may selectively fold upwardly (Fig. 5c) relative to the remainder 111 of the frame 110. The folding described above may allow the frame 110 to travel on a roadway or in other areas having restricted widths and/or lengths.

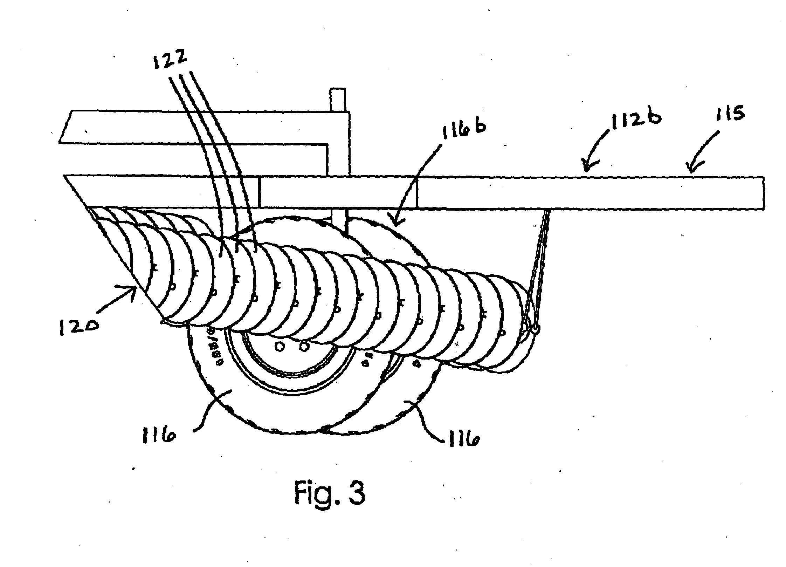

The frame 110 may further include a plurality of tires 116. Two of the tires 116 may be coupled to the frame 110 in a generally central location 116a and may be generally coaxial (Fig. 1), and two of the tires 116 may be coupled to the frame 110 in a generally rearward location 116b and have offset axes (Figs. 1 and 3). The offset axes of the tires 116 at the rearward location 116b may help keep the frame 110 from high-centering (or "bottoming out") when passing over a water furrow in a field or other similar obstacles, as one of the wheels 116 may remain on a higher side of the furrow even when the other does not

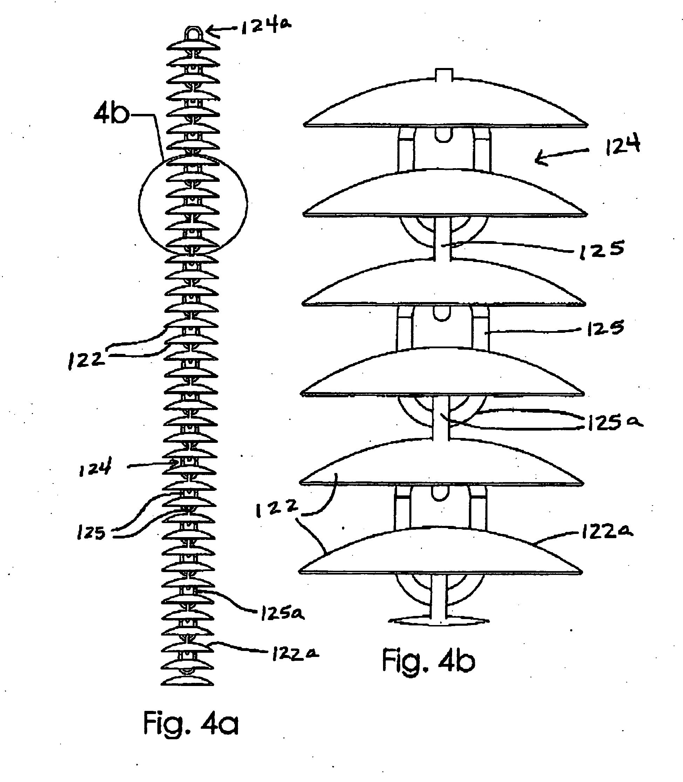

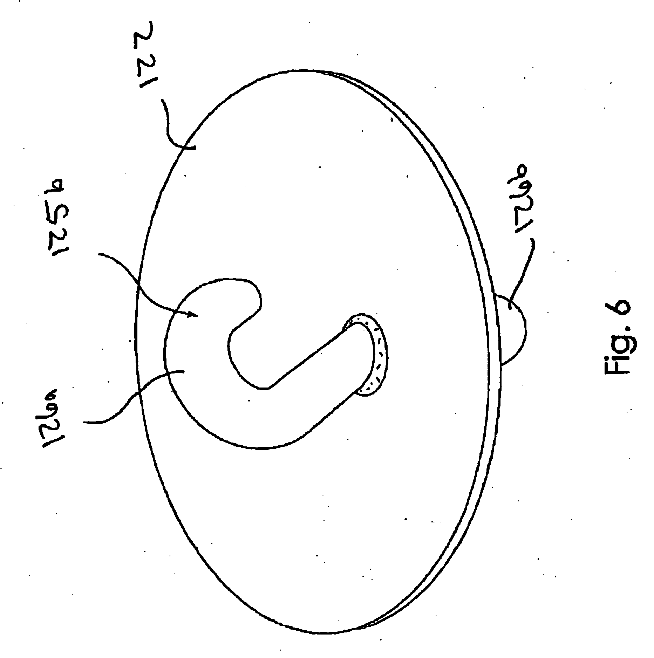

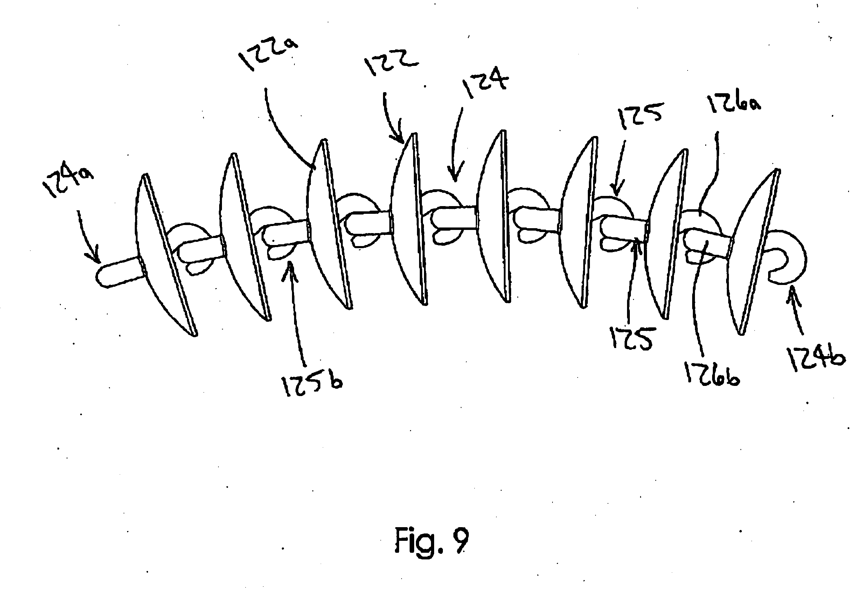

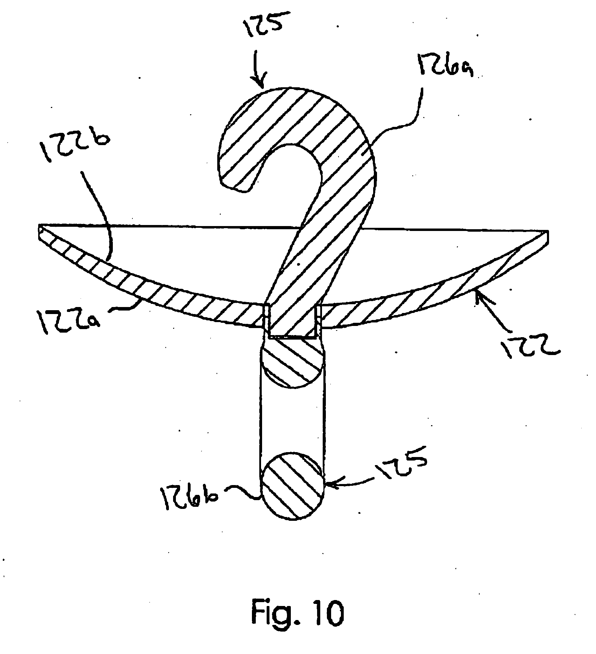

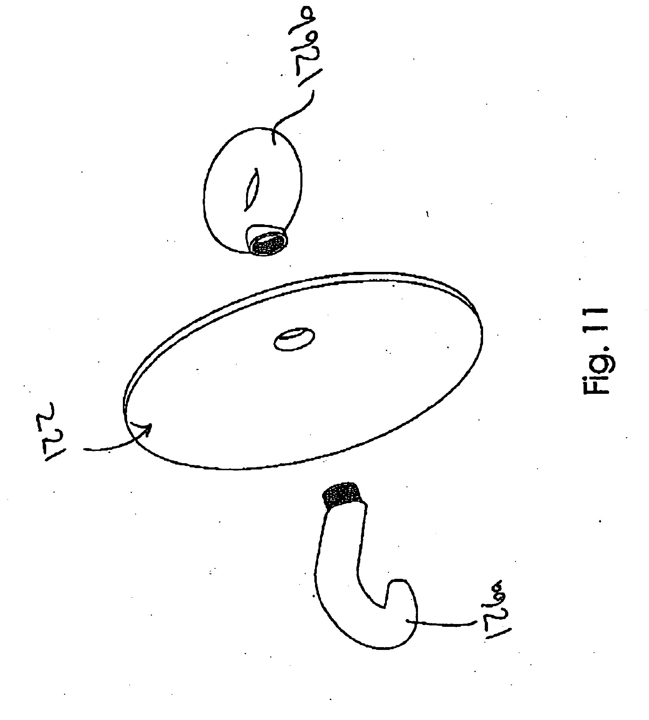

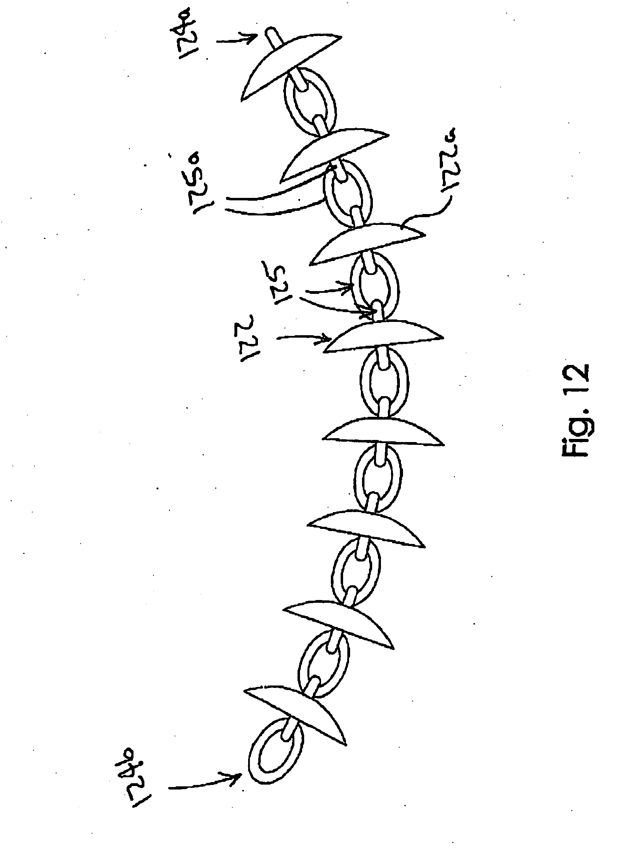

Each harrow member 120 may include a plurality of discs 122 and a chain 124 with a plurality of links 125. As shown in Figs. 4a, 4b, and 6 through 12, the discs 122 may be coupled to the links 125 and extend generally outwardly therefrom. Each chain 124 may have a front end 124a and a rear end 124b, each disc 122 may have a concave side 122b facing a respective chain front end 124a, and each disc 122 may have a convex side 122a facing a respective chain rear end 124b (Figs. 4a, 8, 9, 10, and 12). The links 125 are preferably movable relative to one another and may be closed links 125a, such as links typically used in chains (Figs. 4a, 4b, and 12), or the links 125 may be open links 125b with hook and loop portions 126a, 126b (Figs. 6 through 11). The discs 122 may be coupled to every link 125 (Figs. 4a and 4b), to approximately every second link 125 (Fig. 12), or otherwise as appropriate. If open links 125b are used, the hook portions 126a may be configured to receive a respective loop portion 126b of another link 125, and the loop portions 126b may be configured to receive a respective hook portion 126a of another link 125 (Fig. 9). In addiction, the hook and loop portions 126a, 126b may be selectively separable, as shown in Figs. 10 and 11. In other words, the hook and loop portions 126a, 126b may be screwed together or otherwise fastened to form loops 125.

Returning to Fig. 1, a first harrow member 120 (labeled 120a in Fig. 1) may be operatively coupled to the frame 110 generally adjacent the front end 112a and the left side 112c so that the first harrow member 120a extends in a first diagonal direction. A second harrow member 120 (labeled 120b in Fig. 1) may be operatively coupled to the frame 110 generally adjacent the front end 112a and the right side 112d so that the second harrow member 120b extends in a second diagonal direction generally opposite the diagonal direction of the first harrow member 120a. A third harrow member 120 (labeled 120c in Fig. 1) may be operatively coupled to the frame 110 generally adjacent the left side 112c and the rear end 112b so that the third harrow member 120c extends in generally the same diagonal direction as the second harrow member 120b. A fourth harrow member 120 (labeled 120d in Fig. 1) may be operatively coupled to the frame 110 generally adjacent the right side 112d and the rear end 112b so that the fourth harrow member 120d extends in generally the same diagonal direction as the first harrow member 120a.

The first and second harrow members 120a, 120b may be spaced apart adjacent the front end 112a, and the third and fourth harrow members 120c, 120d may be spaced apart adjacent the rear end 112b. To ensure that all ground surfaces passing underneath the frame 110 contact at least two harrow members 120 extending in opposite diagonal directions, fifth and sixth harrow members 120 (labeled 120e, 120f in Fig. 1) may be included. The fifth harrow member 120e may be operatively coupled to the frame 110 so that it extends in a diagonal direction over a space having a width that is as large as the space between the first and second harrow member 120a, 120b at the front end 112a and as large as the space between the third and fourth harrow member 120c, 120d at the rear end 112b. Similarly, the sixth harrow member 120f may be operatively coupled to the frame 110 so that it extends in a diagonal direction over a space having a width that is as large as the space between the first and second harrow members 120a, 120b at the front end 112a and as large as the space between the third and fourth harrow members 120c, 120d at the rear end 112b. The diagonal direction of the sixth harrow member 120f may be opposite the diagonal direction of the fifth harrow member 120e.

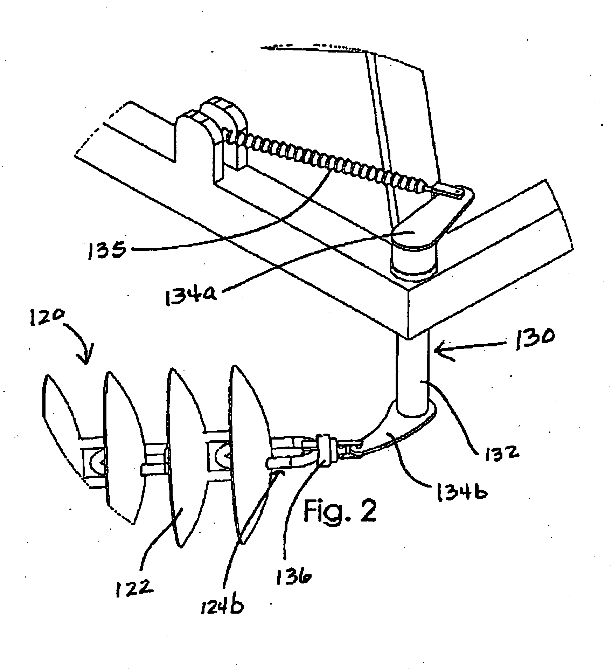

For each harrow member chain 124, the front end 124a may be relatively forward of the rear end 124b so that the concave sides 122b of the discs 122 face forward (toward the frame front end 112a). As best shown in Fig. 2, the chain 124 of each outer harrow member 120 (i.e., the first, second, third, and fourth harrow members 120a, 120b, 120c, 120d) may have an end 124a, 124b coupled to a tensioning assembly 130. Each tensioning assembly 130 may have a generally vertical shaft 132 passing through the frame 110. The shaft 132 may have upper and lower arms 134a, 134b that extend outwardly. The upper arm 134a may be coupled to the frame 110 by a spring 135, and the lower arm 134b may be coupled to a respective chain end 124a, 124b. A bearing 136 may couple each lower arm 134b to the respective chain end 124a, 124b to allow the chain ends 124a, 124b to rotate relative to the lower arms 134b.

In use, the frame 110 may be pulled across a ground surface (e.g., a field used for farming) by a tractor or another appropriate pulling device. The harrow members 120 may act to level the ground surface and additionally break up the ground surface without dragging and removing all of the top soil. More particularly, the links 125 of the chains 124 may rotate as they interact with the ground surface, causing the discs 122 to rotate and cut through the ground surface. The arrangement of the concave discs 122 may allow parts of the ground surface to pass through the chains 124 rather than simply being dragged along, as typically results when conventional chains are pulled across a ground surface.

By positioning the harrow members 120 as described above, two separate harrow members 120 may pass in opposite directions over every part of the ground surface under the frame 110, aiding the leveling and cutting effect of the harrow members 120. The bearings 136 may allow the chains 124 to rotate relative to the frame 110, and the tensioning assemblies 130 may keep the chains 124 in relative tension so that the chains 124 do not get forced too high over high spots of the ground surface or too low in low spots of the ground surface. In other words, the tensioning assemblies 130 may ensure that the harrow members 120 dig into the ground surface only when appropriate. To allow the agricultural implement 100 to travel on a roadway or in other areas having restricted widths and/or lengths, the folding members 113, 114, 115 may be folded as described above. Some or all of the harrow members 120 may or may not have to be removed from the frame 110 for the folding members 113, 114, 115 to be folded.

It is understood that while certain forms of this invention have been illustrated and described, it is not limited thereto except insofar as such limitations are included in the following claim and allowable functional equivalent thereof.

## Claims

1. An agricultural implement(100), comprising:
a frame(110) having a front end(112a), a rear end(112b), a left side(112c), a right side (112d), and a plurality of tires (116);
a plurality of harrow members (120a, 120b, 120c, 120d); each said harrow member (120) having plurality of discs (122);
wherein a first said harrow member(120a) is operatively coupled to said frame(110) generally adjacent said front end(112a) and said left side(112c), wherein said first harrow member(120a) extends in a diagonal direction;
wherein a second said harrow member(120b) is operatively coupled to said fame(110) generally adjacent said front end(112a) and said right side(112d), wherein said second harrow member(120b) extends in a diagonal direction;
wherein a third said harrow member(120c) is operatively coupled to said frame generally adjacent said left side(112c) and said rear end(112b), wherein said third harrow member(120c) extends in a diagonal direction;
wherein a fourth said harrow member(120d) is operatively coupled to said frame generally adjacent said right side(112d) and said rear end(112b), wherein said fourth harrow member(120d) extends in a diagonal direction,
and wherein:
said first(120a), second(120b), third(120c), and fourth(120d) harrow members are outer harrow members;
***characterised in that*** each said harrow member (120) has a chain (124) with a plurality of links (125); said discs (122) being coupled to said links (125) and extending generally outwardly therefrom, and **in that** each said outer harrow member chain(124) has an end coupled to a tensioning assembly(130); and
each said tensioning assembly(130) has a generally vertical shaft(132) passing through said frame(110) and having upper(134a) and lower(134b) arms extending outwardly therefrom, said lower arm(134b) being coupled to a respective said chain end, said upper arm(134a) being coupled to said same(110) by a spring(135).

2. The agricultural implement(100) as in claim 1, wherein respective discs(122) are coupled to approximately every second said link(125) in each said chain(124).

3. The agricultural implement(100) as in any preceding claim, wherein:
each said chain(124) has a front end and a rear end, each said chain front end being relatively forward of said chain rear end; and
each said disc(122) has a concave side(122b) facing a respective chain front end and a convex side(122a) facing a respective chain rear end.

4. The agricultural implement(100) as in any preceding claim, wherein:
said first (120a) and second (120b) harrow members are spaced apart adjacent said frame front end (112a);
said third(120c) and fourth(120d) harrow members are spaced apart adjacent said frame rear end(112b);
a fifth said harrow member(120e) is operatively coupled to said frame(110) and extends in a diagonal direction;
a sixth said harrow member(120f) is operatively coupled to said frame(110) and extends in a diagonal direction opposite said diagonal direction of said fifth harrow (120e) member; and
all ground surfaces passing underneath said frame(110) contact at least two said harrow members (120e, 120f) extending in opposite diagonal directions.

5. The agricultural implement(100) as in any preceding claim, wherein:
two said tires(116) are coupled to said frame (110) in a generally central location and are generally coaxial; and
two said tires(116) are coupled to said frame(110) in a generally rearward location and have offset axes.

6. The agricultural implement as in any preceding claim, wherein:
said frame has a first folding member that defines said frame left side;
said frame has a second folding member that defines said frame right side; and
each said folding member selectively folds upwardly relative to a remainder of said frame ' and inwardly relative to said remainder of said frame.

7. The agricultural implement as in any preceding claim, wherein:
said frame has a folding member that defines said frame rear end; and
said folding member selectively folds upwardly relative to a remainder of said frame.

8. The agricultural implement (100) as in any preceding claim, wherein a bearing(136) couples each said lower arm(134b) to each said chain end to allow rotation of said chain ends relative to said lower arms(134b).

9. The agricultural implement (100) as in any preceding claim, wherein each said chain link(125) is movable relative to each other said chain link(125).

10. The agricultural implement(100) as in claim 1, wherein:
at least one said chain link(125) includes a hook portion(126a) and a loop portion(126b);
said hook portion (126a) is configured to receive a respective loop portion (126b) of another said chain link(125); and
said loop portion(126b) is configured to receive a respective hook portion(126a) of another said chain link(125).

11. The agricultural implement (100) as in claim 10, wherein at least one said hook portion(126a) and loop portion(126b) are selectively separable.

12. The agricultural implement (100) as in any preceding claim, wherein at least one said link(125) is a closed link(125a).

13. The agricultural implement(100) as in any preceding claim, wherein:
each said chain(124) has a front end and a rear end, each said chain front end being relatively forward of said chain rear end;
each said disc(122) has a concave side(122b) facing a respective chain front end and a convex side (122a) facing a respective chain rear end;
said first(120a), second(120b), third(120c), and fourth(120d) harrow members are outer harrow members;
each said outer harrow member chain(124) has an end coupled to a tensioning assembly(130); and
each said tensioning assembly(130) has a generally vertical shaft(132) passing through said frame(110) and having upper(134a) and lower (134b) arms extending outwardly therefrom, said lower arm(134b) being coupled to a respective said chain end, said upper arm(134a) being coupled to said frame(110) by a spring(135).

14. The agricultural implement (100) as in claim 13, wherein:
said first(120a) and second(120b) harrow members are spaced apart adjacent said frame front end (112a);
said third(120c) and fourth(120d) harrow members are spaced apart adjacent said frame rear end(112b);
a fifth said harrow member(120e) is operatively coupled to said frame(110) and extends in a diagonal direction;
a sixth said harrow member(120f) is operatively coupled to said frame(110) and extends in a diagonal direction opposite said diagonal direction of said fifth harrow member(120e); and
all ground surfaces passing underneath said frame(110) contact at least two said harrow members(120e, 120f) extending in opposite diagonal directions.

## Patentansprüche

1. Landwirtschaftliches Gerät (100), das aufweist:
einen Rahmen (110) mit einem vorderen Ende (112a), einem hinteren Ende (112b), einer linken Seite (112c), einer rechten Seite (112d) und einer Vielzahl von Reifen (116);
eine Vielzahl von Eggenelementen (120a, 120b, 120c, 120d), von denen ein jedes Eggenelement (120) eine Vielzahl von Scheiben (122) aufweist,
wobei ein erstes Eggenelement (120a) funktionell mit dem Rahmen (110) verbunden ist, im Allgemeinen benachbart dem vorderen Ende (112a) und der linken Seite (112c), wobei sich das erste Eggenelement (120a) in einer diagonalen Richtung erstreckt;
wobei ein zweites Eggenelement (120b) funktionell mit dem Rahmen (110) verbunden ist, im Allgemeinen benachbart dem vorderen Ende (112a) und der rechten Seite (112d), wobei sich das zweite Eggenelement (120b) in einer diagonalen Richtung erstreckt;
wobei ein drittes Eggenelement (120c) funktionell mit dem Rahmen verbunden ist, im Allgemeinen benachbart der linken Seite (112c) und dem hinteren Ende (112b), wobei sich das dritte Eggenelement (120c) in einer diagonalen Richtung erstreckt;
wobei ein viertes Eggenelement (120d) funktionell mit dem Rahmen verbunden ist, im Allgemeinen benachbart der rechten Seite (112d) und dem hinteren Ende (112b), wobei sich das vierte Eggenelement (120d) in einer diagonalen Richtung erstreckt,
und wobei:
das erste (120a), zweite (120b), dritte (120c) und vierte Eggenelement (120d) äußere Eggenelemente sind;
**dadurch gekennzeichnet, dass** jedes Eggenelement (120) eine Kette (124) mit einer Vielzahl von Kettengliedern (125) aufweist, wobei die Scheiben (122) mit den Kettengliedern (125) verbunden sind und sich im Allgemeinen von dort nach außen erstrecken, und **dadurch**, dass eine jede Kette (124) der äußeren Eggenelemente ein Ende aufweist, das mit einer Spannbaugruppe (130) verbunden ist; und
wobei eine jede Spannbaugruppe (130) eine im Allgemeinen vertikale Welle (132) aufweist, die durch den Rahmen (110) hindurchgeht und einen oberen (134a) und unteren Arm (134b) aufweist, die sich nach außen von dort erstrecken, wobei der untere Arm (134b) mit einem jeweiligen Kettenende verbunden ist, und wobei der obere Arm (134a) mit dem Rahmen (110) mittels einer Feder (135) verbunden ist.

2. Landwirtschaftliches Gerät (100) nach Anspruch 1, bei dem die jeweiligen Scheiben (122) mit annähernd jedem zweien Kettenglied (125) in jeder Kette (124) verbunden sind.

3. Landwirtschaftliches Gerät (100) nach einem der vorhergehenden Ansprüche, bei dem:
eine jede Kette (124) ein vorderes Ende und ein hinteres Ende aufweist, wobei das vordere Ende jeder Kette relativ nach vom vom hinteren Ende der Kette liegt; und
eine jede Scheibe (122) eine konkave Seite (122b), die zu einem vorderen Ende der jeweiligen Kette hin liegt, und eine konvexe Seite (122a) aufweist, die zu einem hinteren Ende der jeweiligen Kette hin liegt.

4. Landwirtschaftliches Gerät (100) nach einem der vorhergehenden Ansprüche, bei dem:
das erste (120a) und zweite Eggenelement (120b) benachbart dem vorderen Ende (112a) des Rahmens beabstandet sind;
das dritte (120c) und vierte Eggenelement (120d) benachbart dem hinteren Ende (112b) des Rahmens beabstandet sind;
ein fünftes Eggenelement (120e) funktionell mit dem Rahmen (110) verbunden ist und sich in einer diagonalen Richtung erstreckt;
ein sechstes Eggenelement (120f) funktionell mit dem Rahmen (110) verbunden ist und sich in einer diagonalen Richtung entgegengesetzt der diagonalen Richtung des fünften Eggenelementes (120e) erstreckt; und
alle Bodenflächen, die sich unterhalb des Rahmens (110) bewegen, mindestens zwei Eggenelemente (120e, 120f) berühren, die sich in entgegengesetzten diagonalen Richtungen erstrecken.

5. Landwirtschaftliches Gerät (100) nach einem der vorhergehenden Ansprüche, bei dem:
zwei Reifen (116) mit dem Rahmen (110) an einer im Allgemeinen zentralen Stelle und im Allgemeinen koaxial verbunden sind; und
zwei Reifen (116) mit dem Rahmen (110) an einer im Allgemeinen hinteren Stelle verbunden sind und versetzte Achsen aufweisen.

6. Landwirtschaftliches Gerät nach einem der vorhergehenden Ansprüche, bei dem:
der Rahmen ein erstes Klappelement aufweist, das die linke Seite des Rahmens definiert;
der Rahmen ein zweites Klappelement aufweist, das die rechte Seite des Rahmens definiert; und
sich ein jedes Klappelement selektiv nach oben relativ zum restlichen Rahmen und nach innen relativ zum restlichen Rahmen klappt.

7. Landwirtschaftliches Gerät nach einem der vorhergehenden Ansprüche, bei dem:
der Rahmen ein Klappelement aufweist, das das hintere Ende des Rahmens definiert; und
sich das Klappelement selektiv nach oben relativ zum restlichen Rahmen klappt.

8. Landwirtschaftliches Gerät (100) nach einem der vorhergehenden Ansprüche, bei dem ein Lager (136) einen jeden unteren Arm (134b) mit jedem Kettenende verbindet, um eine Drehung der Kettenenden relativ zu den unteren Armen (134b) zu gestatten.

9. Landwirtschaftliches Gerät (100) nach einem der vorhergehenden Ansprüche, bei dem ein jedes Kettenglied (125) relativ zu einem jeden anderen Kettenglied (125) beweglich ist.

10. Landwirtschaftliches Gerät (100) nach Anspruch 1, bei dem:
mindestens ein Kettenglied (125) einen Hakenabschnitt (126a) und einen Schlingenabschnitt (126b) umfasst,
wobei der Hakenabschnitt (126a) ausgebildet ist, um einen jeweiligen Schlingenabschnitt (126b) eines anderen Kettengliedes (125) aufzunehmen, und
wobei der Schlingenabschnitt (126b) ausgebildet ist, um einen jeweiligen Hakenabschnitt (126a) eines anderen Kettengliedes (125) aufzunehmen.

11. Landwirtschaftliches Gerät (100) nach Anspruch 10, bei dem mindestens ein Hakenabschnitt (126a) und Schlingenabschnitt (126b) selektiv trennbar sind.

12. Landwirtschaftliches Gerät (100) nach einem der vorhergehenden Ansprüche, bei dem mindestens ein Kettenglied (125) ein geschlossenes Kettenglied (125a) ist.

13. Landwirtschaftliches Gerät (100) nach einem der vorhergehenden Ansprüche, bei dem:
eine jede Kette (124) ein vorderes Ende und ein hinteres Ende aufweist, wobei das vordere Ende der Kette relativ nach vom vom hinteren Ende der Kette liegt;
eine jede Scheibe (122) eine konkave Seite (122b), die zu einem vorderen Ende der jeweiligen Kette hin liegt, und eine konvexe Seite (122a) aufweist, die zu einem hinteren Ende der jeweiligen Kette hin liegt;
das erste (120a), zweite (120b), dritte (120c) und vierte Eggenelement (120d) äußere Eggenelemente sind;
jede Kette (124) der äußeren Eggenelemente ein Ende aufweist, das mit einer Spannbaugruppe (130) verbunden ist; und
jede Spannbaugruppe (130) eine im Allgemeinen vertikale Welle (132) aufweist, die durch den Rahmen (110) hindurchgeht und einen oberen (134a) und unteren Arm (134b) aufweist, die sich nach außen von dort erstrecken, wobei der untere Arm (134b) mit einem jeweiligen Kettenende verbunden ist, und wobei der obere Arm (134a) mit dem Rahmen (110) mittels einer Feder (135) verbunden ist.

14. Landwirtschaftliches Gerät (100) nach Anspruch 13, bei dem:
das erste (120a) und zweite Eggenelement (120b) benachbart dem vorderen Ende (112a) des Rahmens beabstandet sind;
das dritte (120c) und vierte Eggenelement (120d) benachbart dem hinteren Ende (112b) des Rahmens beabstandet sind;
ein fünftes Eggenelement (120e) funktionell mit dem Rahmen (110) verbunden ist und sich in einer diagonalen Richtung erstreckt;
ein sechstes Eggenelement (120f) funktionell mit dem Rahmen (110) verbunden ist und sich in einer diagonalen Richtung entgegengesetzt der diagonalen Richtung des fünften Eggenelementes (120e) erstreckt; und
alle Bodenflächen, die sich unterhalb des Rahmens (110) bewegen, mindestens zwei Eggenelemente (120e, 120f) berühren, die sich in entgegengesetzten diagonalen Richtungen erstrecken.

## Revendications

1. Machine agricole (100), comprenant :
un bâti (110), comportant une extrémité avant (112a), une extrémité arrière (112b), un côté de gauche (112c), un côté de droite (112d) et plusieurs pneumatiques (116) ;
plusieurs éléments de herse (120a, 120b, 120c, 120d) ; chaque dit élément de herse (120) comportant plusieurs disques (122) ;
un dit premier élément de herse (120a) étant accouplé en service audit bâti (110), en général près de ladite extrémité avant (112a) et dudit côté de gauche (112c), ledit premier élément de herse (120a) s'étendant dans une direction diagonale ;
un dit deuxième élément de herse (120b) étant accouplé en service audit bâti (110), en général près de ladite extrémité avant (112a) et dudit côté de droite (112d), ledit deuxième élément de herse (120b) s'étendant dans une direction diagonale ;
un dit troisième élément de herse (120c) étant accouplé en service audit bâti, en général près dudit côté de gauche (112c) et de ladite extrémité de droite (112b), ledit troisième élément de herse (120c) s'étendant dans une direction diagonale ;
un dit quatrième élément de herse (120d) étant accouplé en service audit bâti, en général près dudit côté de droite (112d) et de ladite extrémité arrière (112b), ledit quatrième élément de herse (120d) s'étendant dans une direction diagonale;
et dans laquelle :
lesdits premier (120a), deuxième (120b), troisième (120c) et quatrième (120d) éléments de herse sont des éléments de herse externes ;
**caractérisée en ce que** chaque dit élément de herse (120) comporte une chaîne (124) avec plusieurs maillons (125) ; lesdits disques (122) étant accouplés aux dits maillons (125) et s'étendant en général vers l'extérieur de ceux-ci ; chaque dite chaîne (124) des éléments de herse externes comporte une extrémité accouplée à un assemblage de mise sous tension (130) ; et
chaque dit assemblage de mise sous tension (130) comporte un arbre généralement vertical (132) traversant ledit bâti (110) et comportant des bras supérieur (134a) et inférieur (134b), s'étendant vers l'extérieur de celui-ci, ledit bras inférieur (134b) étant accouplé à une extrémité respective de ladite chaîne, ledit bras supérieur (134a) étant accouplé audit bâti (110) par un ressort (135).

2. Machine agricole (100) selon la revendication 1, dans laquelle des disques respectifs (122) sont accouplés à environ chaque deuxième dit maillon (125) dans chaque dite chaîne (124).

3. Machine agricole (100) selon l'une quelconque des revendications précédentes, dans laquelle :
chaque dite chaîne (124) comporte une extrémité avant et une extrémité arrière, l'extrémité avant de chaque dite chaîne étant située relativement vers l'avant de l'extrémité arrière de ladite chaîne ; et
chaque dit disque (122) comporte un côté concave (122b), faisant face à une extrémité avant de la chaîne respective, et un côté convexe (122a), faisant face à une extrémité arrière de la chaîne respective.

4. Machine agricole (100) selon l'une quelconque des revendications précédentes, dans laquelle :
lesdits premier (120a) et deuxième (120b) éléments de herse sont espacés près de l'extrémité avant (1 12a) dudit bâti ;
lesdits troisième (120c) et quatrième (120d) éléments de herse sont espacés près de l'extrémité arrière (1 12b) dudit bâti ;
un cinquième dit élément de herse (120e) est accouplé en service audit bâti (110) et s'étend dans une direction diagonale ;
un sixième dit élément de herse (120f) est accouplé en service audit bâti (110) et s'étend dans une direction diagonale, opposée à ladite direction diagonale dudit cinquième élément de herse (120e) ; et
toutes les surfaces du sol passant au-dessous dudit bâti (10) contactent au moins deux dits éléments de herse (120e, 120f) s'étendant dans des directions diagonales opposées.

5. Machine agricole (100) selon l'une quelconque des revendications précédentes, dans laquelle :
deux dits pneumatiques (116) sont accouplés audit bâti (110), dans un emplacement généralement central et sont en général coaxiaux ; et
deux dits pneumatiques (116) sont accouplés audit bâti (110), dans un emplacement situé en général vers l'arrière, et comportent des axes décalés.

6. Machine agricole selon l'une quelconque des revendications précédentes, dans laquelle :
ledit bâti comporte un premier élément de pliage, définissant le côté de gauche dudit bâti ;
ledit bâti comporte un deuxième élément de pliage, définissant le côté de droite dudit bâti ; et
chaque dit élément de pliage est replié sélectivement vers le haut par rapport à une partie restante dudit bâti et vers l'intérieur par rapport à ladite partie restante dudit bâti.

7. Machine agricole selon l'une quelconque des revendications précédentes, dans laquelle :
ledit bâti comporte un élément de pliage, définissant l'extrémité arrière dudit châssis ; et
ledit élément de pliage est sélectivement replié vers le haut par rapport à une partie restante dudit bâti.

8. Machine agricole (100) selon l'une quelconque des revendications précédentes, dans laquelle un palier (136) assure l'accouplement de chaque dit bras inférieur (134b) à chaque dite extrémité de chaîne pour permettre la rotation desdites extrémités de la chaîne par rapport aux dits bras inférieurs (134b).

9. Machine agricole (100) selon l'une quelconque des revendications précédentes, dans laquelle chaque dit maillon de chaîne (125) peut être déplacé par rapport à chaque autre dit maillon de chaîne (125).

10. Machine agricole (100) selon la revendication 1, dans laquelle :
au moins un dit maillon de chaîne (125) englobe une partie de crochet (126a) et une partie de boucle (126b) ;
ladite partie de crochet (126a) est configurée de sorte à recevoir une partie de boucle respective (126b) d'un autre dit maillon de chaîne (125) ; et
ladite partie de boucle (126b) est configurée de sorte à recevoir une partie de crochet respective (126a) d'un autre dit maillon de chaîne (125).

11. Machine agricole (100) selon la revendication 10, dans laquelle au moins une dite partie de crochet (126a) et une dite partie de boucle (126b) peuvent être séparées sélectivement.

12. Machine agricole (100) selon l'une quelconque des revendications précédentes, dans laquelle au moins un dit maillon (125) est un maillon fermé (125a).

13. Machine agricole (100) selon l'une quelconque des revendications précédentes, dans laquelle :
chaque dite chaîne (124) comporte une extrémité avant et une extrémité arrière, chaque extrémité avant de ladite chaîne étant située relativement vers l'avant de l'extrémité arrière de ladite chaîne ;
chaque dit disque (122) comporte un côté concave (122b), faisant face à une extrémité avant de la chaîne respective, et un côté convexe (122a) faisant face à une extrémité arrière de la chaîne respective ;
lesdits premier (120a), deuxième (120b), troisième (120c) et quatrième (120d) éléments de herse sont des éléments de herse externes ;
chaque dite chaîne (124) des éléments de herse externes comporte une extrémité accouplée à un assemblage de mise sous tension (130) ; et
chaque dit assemblage de mise sous tension (130) comporte un arbre généralement vertical (132), traversant ledit bâti (110) et comportant des bras supérieur (134a) et inférieur (134b), s'étendant vers l'extérieur de celui-ci, ledit bras inférieur (134b) étant accouplé à une extrémité de ladite chaîne respective, ledit bras supérieur (134a) étant accouplé audit bâti (110) par un ressort (135).

14. Machine agricole (100) selon la revendication 13, dans laquelle :
lesdits premier (120a) et deuxième (120b) éléments de herse sont espacés près de l'extrémité avant (1 12a) dudit bâti ;
lesdits troisième (120c) et quatrième (120d) éléments de herse sont espacés près de l'extrémité arrière (112b) dudit bâti ;
un cinquième dit élément de herse (120e) est accouplé en service audit bâti (110) et s'étend dans une direction diagonale ;
un sixième dit élément de herse (120f) est accouplé en service audit bâti (110) et s'étend dans une direction diagonale, opposée à ladite direction diagonale dudit cinquième élément de herse (120e) ; et
toutes les surfaces du sol passant au-dessous dudit bâti (110) contactent au moins deux dits éléments de herse (120e, 120f) s'étendant dans des directions diagonales opposées.
